(19) Europäisches Patentamt / European Patent Office / Office européen des brevets

(11) **EP 4 528 193 B1**

(12) **FASCICULE DE BREVET EUROPEEN**

(45) Date de publication et mention
de la délivrance du brevet:
**18.02.2026  Bulletin 2026/08**

(21) Numéro de dépôt: **24198708.0**

(22) Date de dépôt: **05.09.2024**

(51) Classification Internationale des Brevets (IPC):
*F25J 3/04* $^{(2006.01)}$    *F25J 3/08* $^{(2006.01)}$
*G01N 1/22* $^{(2006.01)}$    *G01N 1/40* $^{(2006.01)}$
*G01N 1/42* $^{(2006.01)}$    *G01N 1/44* $^{(2006.01)}$
*G01N 33/00* $^{(2006.01)}$    *G01N 33/22* $^{(2006.01)}$
*G01N 1/20* $^{(2006.01)}$

(52) Classification Coopérative des Brevets (CPC):
**G01N 1/2226; F25J 3/04412; F25J 3/04769;
F25J 3/0486; G01N 1/4022; G01N 1/42;
G01N 1/44;** F25J 2280/02; G01N 2001/2235;
G01N 2001/4027

(54) **PROCÉDÉ ET SYSTÈME DE DÉTERMINATION DE LA TENEUR EN AU MOINS UNE IMPURETÉ DANS UN LIQUIDE CRYOGÉNIQUE**

VERFAHREN UND SYSTEM ZUR BESTIMMUNG DES GEHALTS MINDESTENS EINER VERUNREINIGUNG IN EINER KRYOGENEN FLÜSSIGKEIT

METHOD AND SYSTEM FOR DETERMINING THE CONTENT OF AT LEAST ONE IMPURITY IN A CRYOGENIC LIQUID

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **21.09.2023  FR 2309983**

(43) Date de publication de la demande:
**26.03.2025  Bulletin 2025/13**

(73) Titulaire: **L'AIR LIQUIDE, SOCIETE ANONYME
POUR L'ETUDE ET
L'EXPLOITATION DES PROCEDES GEORGES
CLAUDE
75007 Paris (FR)**

(72) Inventeurs:
• **CRAYSSAC, Frédéric
75007 PARIS (FR)**
• **LE BOT, Patrick
75007 PARIS (FR)**
• **MACHON, Daniel
75007 PARIS (FR)**

(74) Mandataire: **Air Liquide
L'Air Liquide S.A.
Direction de la Propriété Intellectuelle
75, Quai d'Orsay
75321 Paris Cedex 07 (FR)**

(56) Documents cités:
FR-A1- 2 858 416    FR-A1- 3 066 596
FR-B1- 3 066 596    US-A1- 2003 228 707

EP 4 528 193 B1

**Description**

La présente invention se rapporte à l'industrie chimique et concerne un système de détermination de la teneur en au moins une impureté dissoute dans un liquide cryogénique prélevé, par exemple, dans un système de séparation des gaz de l'air, ainsi qu'un procédé de détermination correspondant.

Un système de séparation des gaz de l'air comporte des colonnes de distillation à basse et moyenne pression permettant de séparer les différents constituants de l'air. Bien que l'air soit purifié avant son admission dans les colonnes, des impuretés subsistent dans l'air d'alimentation des colonnes et se concentrent notamment dans un vaporiseur d'oxygène dans une des colonnes. En effet, la plupart de ces impuretés présente un coefficient d'équilibre liquide/vapeur tel que la quasi-totalité de ces impuretés reste présente dans la phase liquide du vaporiseur, une partie infinitésimale des impuretés repartant du vaporiseur dans la phase gazeuse. La teneur en impuretés dans la phase liquide augmente donc au fur et à mesure des vaporisations et finit par s'accumuler sous la forme d'un dépôt liquide ou solide dans la matrice en aluminium du vaporiseur.

Des procédés d'adsorption, mis en œuvre avant la distillation, permettent de supprimer dans l'air d'alimentation des colonnes, les hydrocarbures lourds c'est-à-dire à plus de quatre atomes de carbone, ainsi que les hydrocarbures comportant des liaisons insaturées. Les impuretés qui ne sont pas ou peu stoppées par ces procédés d'adsorption sont notamment les hydrocarbures légers et le propane. Les hydrocarbures légers à un ou deux atomes de carbone sont fortement solubles dans l'oxygène, et ne créent donc pas de phase pure pouvant réagir avec l'oxygène dans le vaporiseur. Cependant le propane est relativement peu soluble dans l'oxygène et peut donc créer une phase pure dont le contact avec l'oxygène liquide dans le vaporiseur peut générer une situation explosive notamment lorsque l'énergie dégagée par cette impureté est suffisante pour démarrer la combustion de la matrice du vaporiseur en aluminium.

De plus, même lorsque l'impureté présente dans le vaporiseur n'est pas réactive avec l'oxygène, elle accélère le phénomène d'accumulation de toutes les autres impuretés donc également des impuretés réactives avec l'oxygène. C'est notamment le cas du dioxyde de carbone et du protoxyde d'azote, dont la température de solidification est supérieure à la température opératoire de l'oxygène liquide. Ces impuretés peuvent ne pas être stoppées par les procédés d'adsorption et créer une phase solide dans l'oxygène liquide du vaporiseur, pouvant boucher les canaux de vaporisation du vaporiseur. Ce mécanisme appelé en anglais « dead end boiling » ou « ébullition en cul de sac» accélère la concentration de l'ensemble des impuretés contenues dans le liquide se vaporisant, notamment des hydrocarbures, et augmente donc le risque de combustion de la matrice de vaporisation.

Il est donc nécessaire de surveiller la teneur en impuretés entrant dans les colonnes de distillation et/ou dans le bain d'oxygène du vaporiseur afin d'y maintenir des quantités limites acceptables en impuretés et d'assurer la sécurité de fonctionnement du système de séparation des gaz de l'air. US2003228707A1 et FR2858416A1 proposent des procédés à cet effet.

Une difficulté à surmonter est que les niveaux d'impuretés à mesurer sont extrêmement bas, compte tenu des très faibles solubilités et coefficients d'équilibre liquide/vapeur de ces impuretés, en particulier pour le dioxyde de carbone et le protoxyde d'azote. Afin de pouvoir contrôler des quantités limites acceptables en impuretés, il est nécessaire de mesurer des teneurs inférieures à 100ppb (partie par milliard), et préférentiellement comprises entre 10 et 50ppb. Ces mesures peuvent être continues ou s'effectuer à une fréquence permettant une intervention bien avant l'atteinte d'une teneur critique en impuretés.

Actuellement, les techniques permettant de déterminer la teneur en impuretés dans l'air à distiller ou dans l'oxygène du vaporiseur, utilisent des appareils complexes et requièrent une compétence opérationnelle importante. Ces techniques utilisent des analyseurs de gaz uniquement, ce qui nécessite de prélever le liquide cryogénique entrant dans les colonnes de distillation ou dans le vaporiseur, et de le vaporiser dans un équipement spécifique pour pouvoir ensuite l'analyser. Préférentiellement le prélèvement s'effectue en entrée du vaporiseur, ou en sortie du vaporiseur, ou encore entre différents étages de vaporisation le cas échéant, étant donné que le vaporiseur est un point critique du système de séparation des gaz de l'air.

Ces techniques de l'art antérieur comprennent une vaporisation entière du prélèvement avec ses impuretés pour obtenir un gaz à analyser, dans lequel la teneur en impuretés est identique à la teneur en impuretés dans le prélèvement de liquide cryogénique, la vaporisation étant effectuée dans des conditions empêchant une accumulation des impuretés dans le dispositif de prélèvement ou de vaporisation du prélèvement, pour ne pas fausser les mesures de l'analyseur de gaz.

Afin de faciliter la mesure de la teneur en impuretés dans le liquide cryogénique, les inventeurs ont conçu un appareil et un procédé d'analyse de cette teneur, décrits dans FR3066596B1 et FR3066597B1.

L'appareil permet la vaporisation d'une grande quantité d'un prélèvement de liquide cryogénique à analyser dans une capacité, le gaz ainsi vaporisé étant évacué en circuit ouvert, une quantité de liquide cryogénique résiduel dans lequel les impuretés du prélèvement se sont concentrées, étant conservée à la fin de cette vaporisation. Puis la capacité est maintenue fermée et la quantité résiduelle de liquide cryogénique est entièrement vaporisée dans la capacité, de sorte à obtenir un gaz avec une teneur en impuretés bien plus importante que celle du prélèvement initial, donc plus facile à mesurer par un analyseur de gaz.

Cette approche innovante nécessite que la quantité des impuretés s'évaporant pendant la vaporisation en circuit ouvert, soit négligeable par rapport à la quantité des impuretés subsistant dans le liquide cryogénique résiduel, mais aussi de connaître précisément la quantité de liquide cryogénique résiduel, afin d'évaluer avec précision le facteur de concentration en impuretés entre le volume du prélèvement de liquide cryogénique et le volume de liquide cryogénique résiduel après vaporisation de presque tout le liquide cryogénique prélevé. En multipliant la teneur en impuretés mesurée par l'analyseur de gaz par ce facteur de concentration, on détermine la teneur en impuretés dans le liquide cryogénique prélevé dans le système de séparation des gaz de l'air.

La précision de cette détermination dépend donc de la précision des mesures de la quantité de liquide cryogénique prélevé, de la quantité de liquide cryogénique résiduel et de la teneur en impuretés dans le liquide cryogénique résiduel, cette dernière mesure étant effectuée par l'analyseur de gaz.

La quantité de liquide cryogénique prélevé est facilement mesurable avec moins de 2% d'erreur, mais la quantité de liquide cryogénique résiduel est plus difficile à mesurer, cette dernière mesure étant effectuée avec plus de 10% d'erreur dans certains cas.

En effet, afin de concentrer suffisamment les impuretés dans le liquide cryogénique résiduel, celui-ci représente seulement environ 1% de la quantité de liquide cryogénique prélevé. Pour mesurer précisément ce volume, plusieurs méthodes sont possibles.

Une première méthode est basée sur la mesure de la puissance de chauffage ayant servi à vaporiser le liquide cryogénique prélevé. Cette première méthode nécessite d'évaluer la puissance de chauffage ayant servi uniquement à cette vaporisation, donc d'évaluer aussi les déperditions thermiques à travers la capacité. De plus cette puissance de chauffage est telle (par rapport à la puissance qui serait nécessaire pour vaporiser la quantité de liquide résiduel) qu'il est difficile de savoir si l'on a vaporisé 98,9% ou 99,1% du liquide cryogénique prélevé, ce qui correspond à une erreur de 10% sur la mesure.

Une deuxième méthode consiste à mesurer directement le volume de liquide cryogénique résiduel, mais ce volume étant petit par rapport au volume du prélèvement de liquide cryogénique, la précision de cette mesure est faible, d'autant plus que le système de vaporisation développé par les inventeurs utilise une surface chauffante de géométrie complexe pour laisser échapper le moins possible d'impuretés dans le gaz vaporisé afin de les concentrer dans le liquide résiduel. Cette surface chauffante empêche la formation de zones sur-concentrées en impuretés dans le liquide cryogénique ainsi que la vaporisation à sec sur cette surface chauffante, afin de ne pas modifier les coefficients d'équilibre liquide/vapeur dans la capacité. De plus, le système de vaporisation présente une inertie et continue à vaporiser pendant la mesure, ce qui fausse encore celle-ci.

Une troisième méthode plus précise consiste à mesurer la quantité de liquide résiduel après vaporisation de celui-ci dans la capacité isolée de toute entrée et de toute sortie de matière. En effet, le volume V de la capacité étant connu, en mesurant la température T et la pression P dans la capacité après vaporisation de tout le liquide résiduel, le nombre n de moles de liquide résiduel est obtenu par la relation $PV = ZnRT$, où R est la constante des gaz parfaits (en Joules par mole et par Kelvin) et Z le facteur de compressibilité du gaz obtenu par vaporisation. Cependant cette mesure implique une homogénéité de la température dans la capacité y compris dans les tuyauteries reliant le corps de la capacité aux vannes d'entrée et de sortie de celles-ci. Or étant donné que la température est mesurée juste après vaporisation, pendant laquelle la capacité est amenée à 70°C (degrés Celsius), pour pouvoir enchaîner sur un nouveau cycle de prélèvement et de détermination de la teneur en impuretés du liquide cryogénique prélevé, la température au sein de la capacité n'est en fait pas homogène. Cette troisième méthode de mesure n'est donc pas aussi précise que souhaité.

Il subsiste donc un besoin d'une détermination de la teneur en impuretés d'un liquide cryogénique prélevé dans un système de séparation des gaz de l'air, qui soit peu coûteuse tout en étant suffisamment précise pour assurer la sécurité de fonctionnement du système de séparation.

La présente invention vise à remédier au moins en partie aux inconvénients précités en fournissant un procédé de détermination de la teneur en impuretés dissoutes dans un liquide cryogénique et un système de détermination correspondant, qui permettent de concentrer les impuretés avant leur analyse par un analyseur de gaz, tout en s'affranchissant du problème de mesure d'un volume de liquide cryogénique résiduel.

À cette fin et selon la revendication indépendante 1, l'invention propose un procédé de détermination de la teneur en au moins une impureté dissoute dans un liquide cryogénique, l'au moins une impureté étant moins volatile que le liquide cryogénique, comportant des étapes de :

- remplissage d'une capacité avec un volume initial de liquide cryogénique,
- vaporisation au sein de la capacité de tout le liquide cryogénique présent dans la capacité, la pression dans la capacité lors de la vaporisation étant inférieure ou égale à la pression dans la capacité lors de l'étape de remplissage, et le gaz issu de la vaporisation étant évacué de la capacité, favorisant ainsi la formation d'une phase solide ou liquide de l'impureté dans la capacité,
- isolation de la capacité de toute sortie de matière,

- envoi d'un volume déterminable de gaz dans la capacité, et chauffage du gaz présent dans la capacité de sorte à vaporiser ou sublimer la phase liquide ou solide de l'impureté dans le gaz présent dans la capacité, qui se charge ainsi en l'impureté,
- isolation de la capacité de toute entrée de matière,
- envoi du gaz chargé en l'impureté depuis la capacité vers un analyseur de gaz, et
- détermination de la teneur en l'impureté dans le liquide cryogénique à partir d'une teneur en l'impureté mesurée dans le gaz chargé en l'impureté par l'analyseur de gaz.

Le procédé de détermination selon l'invention se distingue du procédé précédemment mis au point par les inventeurs dans le fait que tout le liquide cryogénique prélevé, correspondant au volume initial de liquide cryogénique, est vaporisé. Ce volume initial est prédéterminé ou en tout cas facilement mesurable. Afin de ne pas modifier ce volume initial lors du remplissage de la capacité, celui-ci s'effectue bien sûr à une pression et une température au sein de la capacité, interdisant une vaporisation du liquide cryogénique.

Le gaz dissolvant ensuite les cristaux d'impuretés et/ou les phases liquides d'impuretés, est de volume déterminable, soit que le volume de gaz dont on remplit la capacité après l'étape de vaporisation est connu, soit qu'il est facilement mesurable.

Les cristaux d'impuretés et/ou les phases liquides d'impuretés correspondent à la quasi-totalité des impuretés présentes dans le volume initial de liquide cryogénique, grâce aux conditions de vaporisation, en circuit ouvert.

Grâce à l'invention, les impuretés présentes dans le volume initial de liquide cryogénique sont donc concentrées dans un volume déterminable de gaz. L'analyseur de gaz reçoit donc un gaz dont la teneur en impuretés est plus facile à déterminer que s'il recevait un gaz formé par vaporisation du volume initial de liquide cryogénique. Cette teneur en impuretés correspond à un nombre de moles d'impuretés dans le volume déterminable de gaz, quasi identique au nombre de moles d'impuretés dans le volume initial de liquide cryogénique, ce qui permet de déterminer la teneur en impuretés dans le volume initial de liquide cryogénique. Le gaz du volume déterminable de gaz est par exemple choisi parmi l'azote, l'hélium, ou de l'air sec non pollué. Autrement dit, tout gaz dépourvu d'impuretés et apte à se charger en l'impureté à mesurer est utilisable.

Le volume déterminable de gaz envoyé dans la capacité correspond préférentiellement à un facteur de concentration supérieur à 30, et préférentiellement supérieur à 50, entre la teneur en impureté mesurée par l'analyseur de gaz et la teneur en impureté correspondante du volume initial de liquide cryogénique. Ce facteur de concentration est le rapport entre un volume gazeux correspondant au volume initial de liquide cryogénique (si celui-ci était entièrement vaporisé dans un volume fermé) et le volume de gaz dans lequel les phases liquides ou solides d'impuretés ont été dissoutes après vaporisation de tout le liquide cryogénique, à conditions de température et de pression identiques.

Dans un mode de réalisation de l'invention, le volume déterminable de gaz est issu d'un réservoir de volume connu, et le procédé de détermination comporte :

- une première étape de mesure de la pression et de la température au sein du réservoir, avant l'étape d'envoi du volume déterminable de gaz dans la capacité,
- une deuxième étape de mesure de la pression et de la température au sein du réservoir, après l'étape d'envoi du volume déterminable de gaz dans la capacité, et
- une étape de détermination du volume déterminable de gaz ou de sa masse en fonction des mesures effectuées lors des première et deuxième étapes de mesure, et en fonction du volume connu du réservoir. En variante, on détermine non pas le volume déterminable de gaz ou sa masse, mais une quantité correspondante, par exemple le nombre de moles de gaz correspondant envoyé dans la capacité pour dissoudre l'impureté.

Ce mode de réalisation de l'invention est simple à mettre en place, puisqu'il nécessite seulement l'intégration d'un réservoir, de deux vannes et d'un peu de tuyauterie au système de détermination précédemment développé par les inventeurs. Une des vannes en sortie du réservoir permet de relier fluidiquement celui-ci à la capacité tandis que l'autre vanne en entrée du réservoir permet d'amener un gaz tel que de l'azote dans le réservoir, à chaque mise en œuvre du procédé de détermination selon l'invention.

Le volume connu du réservoir inclut bien sûr le volume interne du réservoir ainsi que le volume interne des tuyauteries reliant le réservoir à chacune des vannes.

Avant l'étape d'envoi du volume déterminable de gaz dans la capacité, le gaz dans le réservoir est par exemple à la température ambiante et à une pression supérieure à 5 bars, et de préférence comprise entre 5 et 10 bars. Ainsi l'envoi du gaz depuis le réservoir vers la capacité ne nécessite pas un traitement complexe en amont de cette étape. De plus, le gaz étant à une pression supérieure à 5 bars dans le réservoir, la température du gaz dans le réservoir est homogénéisée, ce qui permet de faire moins d'erreur sur la détermination du volume déterminable de gaz introduit dans la capacité.

Dans ce mode de réalisation de l'invention, le procédé de détermination selon l'invention comporte préférentiellement une étape de remplissage du réservoir avec le gaz destiné à se charger en l'impureté, avant ou pendant l'étape de vaporisation. Ainsi le réservoir est rempli de gaz quelques dizaines de minutes avant l'étape d'envoi du volume déterminable de gaz dans la capacité, ce qui permet encore à la température du gaz dans le réservoir de s'équilibrer et de s'homogénéiser.

Le procédé de détermination selon l'invention est de préférence répété par cycles, de manière assez rapprochée pour pouvoir détecter une teneur élevée en impuretés suffisamment rapidement pour pouvoir intervenir à temps sur le système de séparation des gaz de l'air. Pour diminuer la durée d'un cycle de détermination de la teneur en impuretés dans un prélèvement de liquide cryogénique selon l'invention, l'étape de remplissage du réservoir est par exemple réalisée en parallèle d'une étape du procédé de détermination correspondant au cycle en cours ou au cycle précédent, par exemple pendant une étape d'envoi du gaz chargé en impuretés vers l'analyseur de gaz.

Également, afin de pouvoir redémarrer au plus vite un cycle de détermination de la teneur en impuretés d'un nouveau prélèvement de liquide cryogénique, l'étape d'envoi du gaz chargé en l'impureté depuis la capacité vers un analyseur de gaz est suivie d'une étape de refroidissement de la capacité.

Par ailleurs, de préférence, l'étape de vaporisation est contrôlée de sorte à ce que très peu d'impuretés s'échappent dans la phase gazeuse lors de cette étape.

Il est à noter que cette étape de vaporisation peut s'effectuer à pression supérieure ou égale à la pression atmosphérique. En effet, en s'appuyant sur les valeurs d'équilibre thermodynamique des composés en présence, lorsque le liquide cryogénique est maintenu à 15 bars, la quantité de protoxyde d'azote, ou de dioxyde de carbone, ou de propane, s'échappant dans la phase gazeuse lors de la vaporisation en circuit ouvert, reste inférieure à 2% de la quantité d'impuretés restant dans la phase liquide lors de cette étape de vaporisation.

Cependant, de préférence dans le procédé de détermination selon l'invention, la pression au sein de la capacité pendant l'étape de vaporisation est amenée jusqu'à une valeur comprise entre 0,2 bars et 0,3 bars et préférentiellement égale à 0,2 bars. Cela permet d'abaisser la température de vaporisation et par conséquent, de diminuer encore les coefficients d'équilibre liquide/vapeur. De plus, cela augmente l'écart de température entre la surface de chauffage et le liquide cryogénique ce qui permet de diminuer la durée de l'étape de vaporisation. L'étape de vaporisation s'effectue par exemple sous vide contrôlé à travers un système de production de vide tel qu'une pompe à vide ou un éjecteur.

L'invention concerne aussi un système de détermination de la teneur en au moins une impureté dissoute dans un liquide cryogénique selon la revendication 9.

Les moyens de vaporisation sont de préférence aptes à produire un effet de thermosiphon, les moyens de vaporisation comportant par exemple un corps thermiquement conducteur en forme globale de cylindre évidé dans sa hauteur par un conduit d'admission et des conduits d'évacuation, qui débouchent d'une part sur une face du corps délimitant une partie basse de la capacité, et d'autre part sur une face du corps opposée à la face délimitant une partie basse de la capacité, les moyens de vaporisation comportant également un collecteur disposé sur la face opposée et reliant fluidiquement le conduit d'admission avec les conduits d'évacuation.

Cet effet thermosiphon permet d'agiter le liquide cryogénique et donc d'éviter la formation de zones sur-concentrées en impuretés dans le liquide cryogénique, ce qui évite également une vaporisation trop importante de ces impuretés.

Dans cette réalisation des moyens de vaporisation, les conduits d'évacuation entourent par exemple le conduit d'admission et sont de plus petit diamètre que le conduit d'admission.

Les moyens de vaporisation comprennent de plus, dans cette réalisation, au moins un organe de chauffage électrique disposé dans un évidement du corps proximal aux conduits d'évacuation. Par exemple les moyens de vaporisation comprennent plusieurs organes de chauffage électrique sous forme de cartouches chauffantes, le corps comportant des espaces disposés autour des conduits d'évacuation et logeant les cartouches chauffantes, les espaces étant non débouchant sur la face du corps délimitant la partie basse de la capacité. Les espaces sont par exemple séparés par des évidements sur la circonférence du corps, sur au moins une partie de la hauteur du corps, pour augmenter la surface d'échange thermique avec un liquide de refroidissement lors de l'étape de refroidissement.

Pour permettre ce refroidissement, une enveloppe entoure par exemple les moyens de vaporisation, l'enveloppe étant configurée pour contenir un liquide de refroidissement venant au contact des moyens de vaporisation. Dans ce cas, la face opposée débouche hors de l'enveloppe, les conduits d'admission et d'évacuation s'étendant depuis la face délimitant la partie basse de la capacité, au travers de l'enveloppe. Cela permet d'alimenter facilement les cartouches chauffantes, et de les insérer aussi facilement dans le corps, la face opposée comportant notamment des orifices d'insertion des cartouches chauffantes dans les espaces.

Enfin l'invention concerne également un système de séparation des gaz de l'air par distillation cryogénique comportant un système de détermination de la teneur en au moins une impureté dissoute dans un liquide cryogénique selon l'invention, des moyens de prélèvement de fluide circulant dans le système de séparation, des moyens de liquéfaction du fluide prélevé si celui-ci est gazeux, et des moyens d'envoi du fluide prélevé éventuellement liquéfié, dans la capacité pour déterminer sa teneur en l'impureté.

Bien entendu le système et le procédé de détermination de la teneur en au moins une impureté dissoute dans un liquide cryogénique l'invention sont applicables à d'autres systèmes, par exemple à un système de séparation d'un autre type de gaz, dont on voudrait par exemple séparer le dioxyde de carbone.

Le système de détermination selon l'invention de la teneur en au moins une impureté dissoute dans un liquide cryogénique, ainsi que le système de séparation des gaz de l'air selon l'invention, présentent des avantages analogues à ceux du procédé de détermination selon l'invention de la teneur en au moins une impureté dans un liquide cryogénique.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[Fig 1] représente des étapes d'un procédé de détermination selon l'invention de la teneur en au moins une impureté dissoute dans un liquide cryogénique, dans un mode de réalisation de l'invention,
[Fig 2] représente un système de détermination de la teneur en au moins une impureté dissoute dans un liquide cryogénique selon l'invention, dans un mode de réalisation de l'invention, le système comportant notamment une capacité et des moyens de vaporisation représentés en coupe en partie basse de la capacité,
[Fig 3] représente en perspective un élément des moyens de vaporisation représentés sur la figure 2, et
[Fig 4] est une vue en perspective d'une coupe de l'élément de la figure 3.

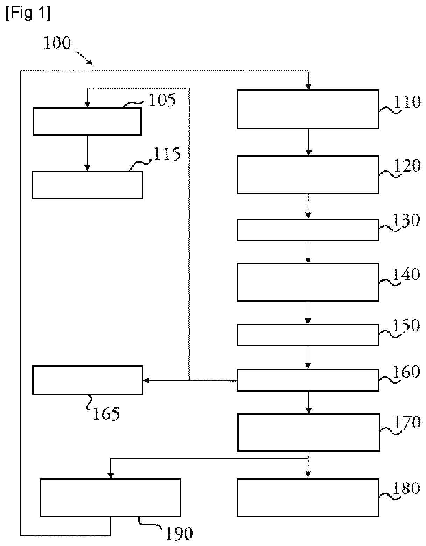

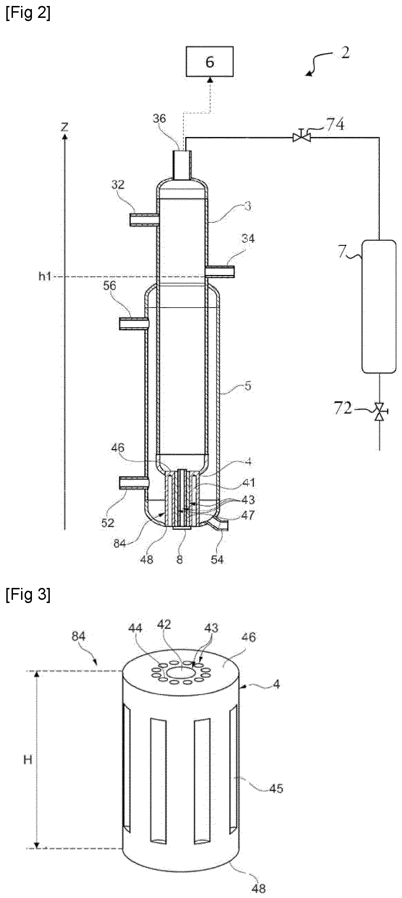

Selon un mode de réalisation de l'invention représenté figure 1, un procédé de détermination 100 selon l'invention de la teneur en au moins une impureté dissoute dans un liquide cryogénique, est mis en œuvre par un système de détermination 2 selon l'invention de la teneur en au moins une impureté dissoute dans un liquide cryogénique représenté figure 2, ce système de détermination 2 faisant partie, dans ce mode de réalisation de l'invention, d'un système de séparation des gaz de l'air par distillation cryogénique.

L'au moins une impureté dont la teneur est déterminée est par exemple du propane. Les teneurs d'autres impuretés que le propane dans le liquide cryogénique sont bien sûr également préférentiellement déterminées par le procédé de détermination 100, le système de détermination 2 permettant ces déterminations multiples.

Le système de séparation des gaz de l'air comporte des moyens de prélèvement de fluide circulant dans le système de séparation. Dans ce mode de réalisation de l'invention, on suppose que ces moyens de prélèvement prélèvent de l'oxygène liquide en entrée d'un vaporiseur d'oxygène du système de séparation des gaz, ce vaporiseur d'oxygène étant disposé dans une colonne distillation du système de séparation des gaz. L'oxygène liquide ainsi prélevé est envoyé dans le système de détermination 2.

Celui-ci comporte notamment une capacité 3 sous forme d'une cuve cylindrique, apte à contenir de l'oxygène liquide, et disposée verticalement sur des pieds non représentés. La capacité 3 comporte une entrée 32 de liquide, une sortie 34 de liquide et un accès 36 de gaz, permettant l'entrée de gaz dans la capacité 3 ou la sortie de gaz de la capacité 3.

Le système de détermination 2 comporte également un réservoir 7 d'un volume $V_R$ par exemple de 2 litres, connecté fluidiquement à l'accès 36 de gaz de la capacité 3 par un premier conduit comprenant une vanne 74 permettant de couper la circulation de fluide entre le réservoir 7 et la capacité 3. Un deuxième conduit, d'amenée de gaz, est relié au réservoir 7 par l'intermédiaire d'une vanne 72. Il est à noter que dans cette demande, le volume $V_R$ inclut le volume des tuyauteries jusqu'aux vannes 72 et 74.

Par ailleurs, le système de détermination 2 comporte des moyens de mesure de température et de pression dans le réservoir 7.

Préalablement à une première mise en œuvre d'une étape de remplissage 110 de la capacité 3 du procédé de détermination 100 selon l'invention, le réservoir 7 est rempli, lors d'une étape 105 du procédé de détermination, de diazote à l'état gazeux, à température ambiante et à une pression de 6 bars absolue. Bien sûr en variante un autre type de gaz et/ou d'autres conditions de stockage de ce gaz dans le réservoir 7 peuvent être choisis.

Quelques dizaines de minutes après l'étape 105 de remplissage du réservoir 7, la température du gaz est équilibrée dans le réservoir 7. Une première mesure de température et de pression dans le réservoir 7 est alors effectuée par des moyens de mesure de température et de pression dans le réservoir 7, lors d'une étape 115 de mesure, fournissant une température Ti et une pression Pi.

Pendant que le diazote s'homogénéise en température dans le réservoir 7 entre les étapes 105 et 115 venant d'être décrites, on met par exemple en œuvre la première étape 110 du procédé de détermination 100.

L'oxygène liquide prélevé dans le système de séparation correspond à un volume initial de liquide cryogénique, c'est-à-dire ici d'oxygène liquide, qui est envoyé dans la capacité 3, par l'entrée 32 de liquide sur la capacité 3, lors de cette première étape 110 du procédé de détermination 100, cette première étape 110 correspondant au remplissage de la capacité 3.

Ce volume initial de liquide cryogénique est prédéterminé. Afin de l'obtenir précisément, la capacité 3 est remplie jusqu'à ce que le liquide cryogénique déborde de la capacité 3 par la sortie de liquide 34, dont la position sur la capacité 3 est déterminée de sorte à ce que la capacité 3 soit remplie du volume initial prédéterminé de liquide cryogénique lorsque celui-ci atteint la sortie de liquide 34. La hauteur du liquide cryogénique dans la capacité 3 est alors h1. Cette hauteur est mesurée verticalement par rapport au sol selon un axe vertical Z. A titre indicatif, dans ce mode de réalisation de

6

l'invention, la capacité 3 a une contenance de 1,3 litres et le volume initial de liquide cryogénique est de 0,8 litre.

Lors de l'étape 110 de remplissage, la pression et la température du liquide cryogénique interdisent la vaporisation de celui-ci. La température du liquide cryogénique est notamment inférieure à sa température de vaporisation à la pression à laquelle il est soumis lors de cette étape.

L'étape suivante du procédé de détermination 100 est une étape de vaporisation 120 du liquide cryogénique jusqu'à sa dernière goutte. Dans cette étape, l'entrée 32 et la sortie 34 de liquide sur la capacité 3 sont fermées, tandis que l'accès 36 de gaz, disposé au sommet de la capacité 3, est ouvert. En effet le liquide cryogénique transformé en vapeur est évacué lors de cette étape de vaporisation 120, par la sortie 36 de gaz.

Cette vaporisation est effectuée par des moyens de vaporisation 84 disposés en partie inférieure de la capacité 3, qui amènent le liquide cryogénique à sa température de vaporisation, la pression de vaporisation dans la capacité 3 étant tirée sous vide jusqu'à une pression d'environ 0,2 bar absolue. Grâce à cette faible pression, la température de vaporisation (ou température de bulle) est plus basse qu'à pression atmosphérique, ce qui diminue la durée de l'étape de vaporisation 120. De plus cette faible pression diminue les coefficients d'équilibre liquide/vapeur, évitant de laisser échapper une quantité importante d'impuretés dans la phase gazeuse.

L'étape de vaporisation 120 permet ainsi de concentrer progressivement les impuretés présentes dans le volume initial de liquide cryogénique, dans la phase liquide d'oxygène présente dans la capacité 3, jusqu'à disparition de celle-ci et formation de cristaux d'impuretés ou de phases liquides d'impuretés dans la capacité 3.

Les moyens de vaporisation 84 sont plus particulièrement visibles sur la figure 3. Ils comportent un corps 4 en cuivre, globalement en forme d'un cylindre de hauteur H. Le corps 4 est disposé selon cette hauteur H verticalement en partie inférieure de la capacité 3, de sorte à ce qu'une face 46 du corps correspondant à une base du cylindre, soit disposée horizontalement et forme une partie basse de la capacité 3. Autrement dit le fond de la cuve cylindrique formant la capacité 3 est constitué en partie par la face 46 du corps 4, qui affleure par rapport aux parois en aluminium de la cuve cylindrique.

Une face opposée 48 du corps 4 correspondant à l'autre base du cylindre, est donc disposée horizontalement de façon proximale au sol par rapport à la face 46 formant la partie basse de la capacité 3.

Le corps 4 est traversé sur sa hauteur par des conduits 43 disposés verticalement, à savoir un conduit d'admission 42, au centre du corps 4, et des conduits d'évacuation 44 entourant le conduit d'admission 42. Les conduits d'évacuation 44 sont de plus petit diamètre que le conduit d'admission 42. Un collecteur 8 en cuivre est rapporté sur la face opposée 48 de sorte à faire communiquer fluidiquement le conduit d'admission 42 et les conduits d'évacuation 44. Le collecteur 8 fait partie des moyens de vaporisation 84.

Bien entendu la partie inférieure de la capacité 3 et les moyens de vaporisation 84 forment des moyens étanches de retenue du liquide cryogénique.

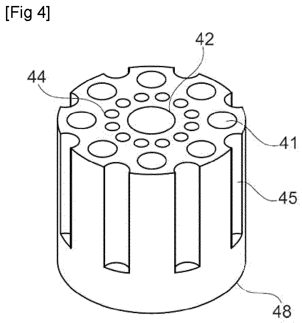

Les moyens de vaporisation 84 comportent également des cartouches chauffantes logées dans des espaces 41 (visibles figure 4) disposés dans le corps 4 autour des conduits d'évacuation 44. Ces espaces 41 s'étendent parallèlement aux conduits d'évacuation 44 dans le corps 4, sans déboucher sur la face 46 formant la partie basse de la capacité 3. Ils débouchent cependant sur la face opposée 48 afin de permettre l'insertion des cartouches chauffantes dans ces cavités 41 ainsi que l'alimentation électrique de ces cartouches chauffantes.

Des évidements 45 sous forme de rainures, creusent la surface cylindrique du corps 4 entre les espaces 41, afin notamment d'augmenter la surface d'échange thermique entre le corps 4 et un liquide de refroidissement destiné à circuler dans une enveloppe 5, entourant la moitié inférieure de la capacité 3 et notamment une partie des moyens de vaporisation 84. Plus précisément l'enveloppe 5 prend la forme d'une enveloppe annulaire dont un premier bord circulaire entoure le corps 4 en bordant la face opposée 48 et dont un deuxième bord circulaire entoure la capacité 3 légèrement au-dessous de la sortie 34 de liquide sur la capacité 3. L'utilité de cette enveloppe 5 sera décrite plus loin.

Les moyens de vaporisation 84 fonctionnent comme un vaporiseur à bain avec un effet de thermosiphon dans les conduits d'évacuation 44. En effet, lors de l'étape de vaporisation 120, les cartouches chauffantes sont alimentées, et amènent la température du liquide cryogénique présent dans les conduits d'évacuation 44 à sa température de vaporisation, laissant échapper l'oxygène vaporisé avec très peu d'impuretés vers la sortie 36 de gaz. Une circulation se crée du fait des flux thermiques, le liquide cryogénique circulant dans le conduit d'admission 42 depuis la face 46 vers la face opposée 48 du corps 4, puis parcourant le collecteur 8 pour alimenter en liquide cryogénique les conduits d'évacuation 44.

Cette circulation permet une bonne agitation et une bonne homogénéité du liquide cryogénique dans les moyens de vaporisation 84 et notamment au niveau de sa surface chauffante formée par les surfaces internes des conduits d'évacuation 44, permettant ainsi de garder un coefficient d'équilibre liquide/vapeur favorable à la conservation des impuretés dans la phase liquide d'oxygène. De plus la surface chauffante reste mouillée grâce à cette circulation de liquide, le plus longtemps possible avant la cristallisation ou la liquéfaction des impuretés, ce qui permet également de limiter l'échappement des impuretés dans la phase gazeuse d'oxygène.

Afin de ne pas transmettre une chaleur de vaporisation au liquide cryogénique dans le conduit d'admission 42, la surface interne de celui-ci est recouverte d'une chemise 47 thermiquement isolante, par exemple en Téflon®.

Grâce aux cartouches chauffantes et à la bonne conductivité du corps 4, le flux thermique dans les moyens de vaporisation est contrôlé ce qui permet de maîtriser la température de la surface chauffante. Notamment le corps 4 permet par sa matière d'homogénéiser la température des surfaces internes des conduits d'évacuation 44.

Ceux-ci ont une section circulaire afin de favoriser un bon mouillage de leurs surfaces internes, qui sont lisses ou texturées, par exemple poreuses ou présentant des ailettes afin d'améliorer le coefficient d'échange, augmenter le flux thermique et diminuer la durée de cette étape de vaporisation 120. La basse pression appliquée dans la capacité 3 permet notamment d'augmenter l'écart de température entre la température de la surface chauffante et la température de vaporisation du liquide sans risquer de laisser échapper une trop grande quantité d'impuretés dans la phase gazeuse.

La configuration du corps 4 et notamment la disposition de ses conduits 43, permet d'avoir une surface chauffante mouillée de grande dimension, le plus longtemps possible pendant l'étape de vaporisation 120, bien que le volume de liquide cryogénique résiduel soit très petit.

Lorsque la dernière goutte d'oxygène liquide est vaporisée, une brusque augmentation de la température est détectée par une sonde de température présente dans les moyens de vaporisation 84, et qui fait bien sûr partie du système de détermination 2. Les impuretés sont alors présentes sous forme de cristaux ou d'une ou plusieurs phases liquides d'impuretés dans la capacité 3, en fonction des impuretés présentes initialement dans le liquide d'oxygène prélevé.

Le procédé de détermination met alors en œuvre une étape 130 d'isolation de la capacité 3 de toute sortie de matière, notamment l'entrée 32 de liquide, la sortie 34 de liquide et l'accès 36 sont fermés, afin de conserver les impuretés dans la capacité 3. De plus dans cette étape 130, les cartouches chauffantes ne sont plus alimentées électriquement.

L'étape suivante 140 est l'envoi d'un volume déterminable de gaz dans la capacité 3, ce gaz étant du diazote dans ce mode de réalisation de l'invention. Pour cela, on ouvre la vanne 74, ce qui envoie une partie du diazote présent dans le réservoir 7, dans la capacité 3, celle-ci étant toujours isolée des autres circuits du système de détermination. La pression dans le réservoir 7 étant supérieure à celle de la capacité 3, cet envoi de gaz se fait naturellement. Grâce à la différence de pression entre le réservoir 7 et la capacité 3, de l'ordre de plusieurs bars, et des tailles relativement comparables du réservoir 7 et de la capacité 3, le gaz qui remplit cette capacité 3 est assez homogène en température, ce qui permet de faire moins d'erreur sur la mesure moyenne de la quantité de gaz introduit dans la capacité 3, comme expliqué ci-après.

Cette étape 140 comprend une phase de chauffage, par exemple réutilisant les cartouches chauffantes des moyens de vaporisation, pour vaporiser, sublimer et réchauffer le gaz présent dans la capacité 3 jusqu'à une température au moins supérieure à -70°C (de préférence supérieure à 0°C).

Le gaz injecté, ici du diazote, doit être « sec » autrement dit sans humidité c'est-à-dire contenant moins de 1 ppm (partie par million) d'eau et de préférence moins de 100 ppb (partie par milliard) d'eau, et sans présence des impuretés à analyser ou autres impuretés qui pourraient perturber l'analyse des impuretés à mesurer. Bien sûr d'autres types de gaz secs et sans les impuretés à analyser sont utilisables, par exemple de l'air sec non pollué, de l'argon, etc.

Les impuretés à l'état liquide et/ou solide passent ainsi à l'état gazeux et se dissolvent dans le diazote ainsi introduit dans la capacité 3, auquel est mélangé un restant de dioxygène gazeux non échappé de la capacité 3 à la fin de l'étape 120 de vaporisation. Cette dilution des impuretés dans le diazote est rapide, de l'ordre de quelques secondes. Les impuretés ainsi diluées dans le diazote pourront ainsi être facilement analysées ultérieurement par un analyseur de gaz 6 du système de détermination.

Le volume de diazote introduit dans la capacité 3 est éventuellement contrôlé, notamment en fonction de la pression mesurée dans le réservoir 7 au cours de l'étape 105 ou de cette étape 140 d'envoi du volume déterminable de gaz, afin d'obtenir approximativement le facteur de concentration souhaité et/ou un volume de gaz nécessaire pour l'analyse de la teneur en impuretés du diazote chargé en impuretés.

L'étape suivante 150 est l'isolation de la capacité 3 de toute entrée et sortie de matière, par la fermeture de la vanne 74. Le procédé de détermination 100 procède alors à une nouvelle mesure de température et de pression dans le réservoir 7 lors d'une étape 160, fournissant un température Tf et une pression Pf.

Puis on ouvre de nouveau l'accès 36 de gaz afin d'envoyer le diazote gazeux chargé en impuretés dans un analyseur de gaz 6, lors d'une étape 170 du procédé de détermination 100.

En parallèle de cette étape 170 d'envoi du diazote gazeux chargé en impuretés dans l'analyseur de gaz 6, le réservoir 7 est rempli de nouveau en diazote à température ambiante, pour atteindre la pression initiale Pi de 6 bars, lors d'une nouvelle étape 105, qui sera suivie quelques dizaines de minutes plus tard d'une nouvelle étape 115 de mesure de la pression et de la température dans le réservoir 7. En variante, l'étape 105 a lieu 5 à 10 minutes seulement avant l'étape de vaporisation 120 du liquide cryogénique dans la capacité 3.

Toujours en parallèle de cette étape 170 d'envoi du diazote gazeux chargé en impuretés dans l'analyseur de gaz 6, le procédé de détermination 100 détermine, lors d'une étape 165, le volume ou la masse de diazote introduit dans la capacité 3 en fonction des mesures effectuées lors des étapes de mesure 115 et 160 de température et de pression dans le réservoir 7, et du volume $V_R$ connu du réservoir 7. La masse M de diazote introduit dans la capacité 3 vaut en effet :

M = (Pi / Ti - Pf / Tf) * $V_R$ * Mmol / R, où Mmol est la masse molaire du diazote, * l'opérateur multiplication et / l'opérateur division.

Le volume V de diazote introduit dans la capacité 3 est égal à :

$V_R$ * masse volumique du diazote (à la pression Pi et à la température Ti initiales mesurées) / masse volumique normale du diazote (dans les conditions Normales de pression et de température soient 1,013 bar et 0°C) - $V_R$ * masse volumique du diazote (à la pression Pf et à la température Tf finales mesurées) / masse volumique normale du diazote (dans les conditions Normales de pression et de température soient 1,013 bar et 0°C).

Cette détermination de la quantité de diazote introduite dans la capacité 3 lors de l'étape 140, est nécessaire pour déterminer ensuite les teneurs en impuretés dans le liquide cryogénique prélevé, comme expliqué ci-dessous.

Une fois les teneurs en impuretés dans le diazote déterminées par l'analyseur 6 lors de l'étape 170, et la quantité de diazote introduite dans la capacité 3 déterminée lors de l'étape 165, le procédé de détermination 100 détermine lors d'une étape 180, les teneurs en impuretés dans le liquide cryogénique prélevé en entrée du vaporiseur du système de séparation des gaz de l'air, et notamment sa teneur en propane.

La quantité d'impuretés présente initialement dans le volume initial de liquide cryogénique prélevé, est quasi identique à la quantité d'impuretés présente dans le volume déterminable de gaz introduit dans la capacité 3 lors de l'étape 140, grâce à la très faible proportion d'impuretés vaporisées lors de l'étape 120 de vaporisation du liquide cryogénique.

Pour affiner la détermination de la teneur en impureté dans le liquide cryogénique prélevé, on ajoute au volume V ou à la masse M de diazote introduit dans la capacité 3, le volume restant ou la masse restante de gaz dans la capacité 3 juste après l'isolation de celle-ci de toute sortie de matière, et avant envoi du gaz présent dans le réservoir 7 dans la capacité 3. Ce volume/cette masse de gaz restant est calculé(e) de façon similaire par des mesures de température et de pression dans la capacité 3 juste après l'isolation de celle-ci de toute sortie de matière, et avant envoi du gaz présent dans le réservoir 7 dans la capacité 3. Dans le cas où ce volume/cette masse de gaz restant est calculé(e), le système de détermination 2 comporte donc des moyens de mesure de la pression et de la température au sein de la capacité 3.

Ainsi la concentration de propane dans ce volume déterminable de gaz, déterminée par l'analyseur 6, permet, grâce à la connaissance du volume déterminable de gaz et du volume restant de gaz dans la capacité, de calculer le nombre de moles de propane dans ce volume déterminable de gaz auquel on ajoute le volume restant, ce nombre de moles étant quasi identique au nombre de moles de propane dans le volume initial de liquide cryogénique prélevé, et donc de déterminer la teneur en propane dans le volume initial de liquide cryogénique prélevé.

Il suffit en effet de multiplier la teneur mesurée par l'analyseur de gaz lors de l'étape 180, par un facteur de concentration égal au volume V de diazote introduit dans la capacité 3 auquel on a ajouté le volume restant de gaz dans la capacité 3 juste avant cette introduction, divisé par le volume gazeux correspondant au volume initial de liquide cryogénique prélevé. Le volume gazeux correspondant au volume initial de liquide cryogénique prélevé correspond au volume gazeux issu d'une vaporisation totale du volume initial de liquide cryogénique prélevé dans un volume fermé, à conditions de température et de pression bien sûr identiques à celles correspondant au volume V de diazote introduit dans la capacité 3 additionné du volume restant de gaz dans la capacité 3, auquel ce volume gazeux est rapporté. Par rapport à l'art antérieur, cette détermination de la teneur en impureté dans le volume initial de liquide cryogénique prélevé est beaucoup plus précise, puisque la détermination du nombre de moles de propane dans le volume initial de liquide cryogénique prélevé est lui-même plus précis, grâce à la détermination du volume déterminable de diazote introduit dans la capacité 3 à l'étape 140, celle-ci étant effectuée avec moins de 2% d'erreur.

En effet, la précision de cette détermination dépend directement des précisions des mesures de la pression, de la température et du volume du réservoir, étant donné les calculs effectués lors de l'étape 165. Or :

- les mesures de pression sont facilement effectuées avec moins de 0,05% d'erreur,
- les mesures de température sont facilement effectuées avec moins de 0,17% d'erreur, et
- la mesure du volume $V_R$ du réservoir 7, est facilement effectuée avec moins de 0,05% d'erreur, cette mesure pouvant s'effectuer par la mesure de la masse d'un liquide remplissant entièrement ce volume.

En parallèle de l'étape 180 de détermination des teneurs en impuretés dans le liquide cryogénique prélevé en entrée du vaporiseur du système de séparation des gaz de l'air, le procédé de détermination 100 met en œuvre une étape 190 de refroidissement de la capacité 3, lors de laquelle un liquide à une température inférieure à la température de remplissage du liquide cryogénique, est envoyé dans l'enveloppe 5 par une entrée 52 de liquide dont l'enveloppe 5 est pourvue dans sa partie inférieure. Ce liquide est par exemple de l'oxygène liquide. Une sortie 56 de gaz dans une partie supérieure de l'enveloppe 5 permet de libérer une phase gazeuse produite par évaporation du liquide dans l'enveloppe 5 au contact de la paroi chaude de la capacité 3.

Puis le liquide de refroidissement est évacué de l'enveloppe 5 par une sortie 54 située en partie basse de l'enveloppe 5, et le système de détermination 2 est prêt pour une nouvelle mise en œuvre du procédé de détermination 100 et notamment d'une nouvelle étape 110 de remplissage de la capacité 3 avec du liquide cryogénique prélevé dans le système de séparation des gaz de l'air.

De préférence cependant, l'étape de refroidissement a lieu après la mesure de la teneur de l'impureté à travers l'analyseur et après le balayage du volume de la capacité 3 c'est-à-dire après remplacement de son contenu par un gaz dit propre ou après tirage au vide de son contenu en y appliquant une pression au moins inférieure à 0,25 bar absolu.

Grâce à l'invention, chaque cycle de détermination de la teneur en impureté réalisé par le procédé de détermination selon l'invention, est réalisable en 30 à 60 minutes en fonction des conditions opératoires, et généralement en moins de 40 minutes. Bien sûr, l'invention n'est pas limitée aux exemples qui viennent d'être décrits et de nombreux aménagements peuvent être apportés à ces exemples sans sortir du cadre de l'invention. Notamment le prélèvement de liquide cryogénique est en variante effectué en entrée des colonnes de distillation du système de séparation des gaz de l'air, ou bien en sortie du vaporiseur d'oxygène, ou encore entre différents étages de vaporisation le cas échéant, l'oxygène gazeux pouvant être préalablement liquéfié avant d'être analysé.

De plus l'ordre de réalisation des étapes du procédé de détermination 100 est modifiable, notamment lorsque certaines étapes sont réalisables en parallèle d'autres étapes, par exemple l'étape de refroidissement de la capacité 3 peut être effectuée en parallèle de l'étape de remplissage du réservoir 7.

L'invention est décrite dans le contexte d'un liquide cryogénique provenant de la séparation d'air, tel que l'oxygène, l'azote ou l'argon. Il va de soi que l'invention s'applique à n'importe lequel liquide cryogénique, par exemple le dioxyde de carbone, le monoxyde de carbone, l'hydrogène, l'hélium, le méthane, le krypton, le xénon, le néon.

Enfin les caractéristiques des différentes variantes de réalisation de l'invention envisagées dans cette demande, peuvent être combinées pour réaliser l'invention, dans la mesure où ces variantes ne sont pas incompatibles entre elles.

**Revendications**

1. Procédé de détermination (100) de la teneur en au moins une impureté dissoute dans un liquide cryogénique, l'au moins une impureté étant moins volatile que le liquide cryogénique, comportant des étapes de :

   • remplissage (110) d'une capacité (3) avec un volume initial de liquide cryogénique,
   • vaporisation (120) au sein de la capacité (3) de tout le liquide cryogénique présent dans la capacité (3), la pression dans la capacité (3) lors de la vaporisation (120) étant inférieure ou égale à la pression dans la capacité (3) lors de l'étape de remplissage, et le gaz issu de la vaporisation (120) étant évacué de la capacité (3), favorisant ainsi la formation d'une phase solide ou liquide de l'impureté dans la capacité (3), - isolation (130) de la capacité (3) de toute sortie de matière,
   • envoi (140) d'un volume déterminable de gaz dans la capacité (3), et chauffage du gaz présent dans la capacité (3) de sorte à vaporiser ou sublimer la phase liquide ou solide de l'impureté dans le gaz présent dans la capacité (3) qui se charge ainsi en l'impureté,
   • isolation (150) de la capacité (3) de toute entrée de matière,
   • envoi du gaz (170) chargé en l'impureté depuis la capacité (3) vers un analyseur de gaz (6), et
   • détermination (180) de la teneur en l'impureté dans le liquide cryogénique à partir d'une teneur en l'impureté mesurée dans le gaz chargé en l'impureté par l'analyseur de gaz (6).

2. Procédé de détermination (100) de la teneur en au moins une impureté dissoute dans un liquide cryogénique selon la revendication 1, dans lequel le gaz du volume déterminable de gaz est choisi parmi l'azote, l'hélium, ou de l'air sec non pollué.

3. Procédé de détermination (100) de la teneur en au moins une impureté dissoute dans un liquide cryogénique selon la revendication 1 ou 2, dans lequel le volume déterminable de gaz est issu d'un réservoir (7) de volume connu, et dans lequel le procédé de détermination (100) comporte :

   • une première étape de mesure (115) de la pression et de la température au sein du réservoir (7), avant l'étape d'envoi (140) du volume déterminable de gaz dans la capacité (3),
   • une deuxième étape de mesure (160) de la pression et de la température au sein du réservoir (7), après l'étape d'envoi (140) du volume déterminable de gaz dans la capacité (3), et
   • une étape de détermination (165) du volume déterminable de gaz ou de sa masse en fonction des mesures effectuées lors des première et deuxième étapes de mesure (115, 160), et en fonction du volume connu du réservoir (7).

4. Procédé de détermination (100) de la teneur en au moins une impureté dissoute dans un liquide cryogénique selon la revendication 3, dans lequel, avant l'étape d'envoi (140) du volume déterminable de gaz dans la capacité (3), le gaz dans le réservoir est à la température ambiante et à une pression supérieure à 5 bars, et de préférence comprise entre 5 et 10 bars.

**5.** Procédé de détermination (100) de la teneur en au moins une impureté dissoute dans un liquide cryogénique selon la revendication 3 ou 4, comportant une étape de remplissage (105) du réservoir (7) avec le gaz destiné à se charger en l'impureté, avant ou pendant l'étape de vaporisation (120).

**6.** Procédé de détermination (100) de la teneur en au moins une impureté dissoute dans un liquide cryogénique selon l'une quelconque des revendications 1 à 5, dans lequel la pression au sein de la capacité (3) pendant l'étape de vaporisation (120) est amenée jusqu'à une valeur comprise entre 0,2 bars et 0,3 bars et préférentiellement égale à 0,2 bars.

**7.** Procédé de détermination (100) de la teneur en au moins une impureté dissoute dans un liquide cryogénique selon l'une quelconque des revendications 1 à 6, dans lequel le volume déterminable de gaz envoyé dans la capacité (3) correspond à un facteur de concentration supérieur à 30 entre la teneur en impureté mesurée par l'analyseur de gaz (6) et la teneur en impureté correspondante du volume initial de liquide cryogénique.

**8.** Procédé de détermination (100) de la teneur en au moins une impureté dissoute dans un liquide cryogénique selon l'une quelconque des revendications 1 à 7, dans lequel l'étape d'envoi (170) du gaz chargé en l'impureté depuis la capacité (3) vers un analyseur de gaz (6) est suivie d'une étape de refroidissement (190) de la capacité (3).

**9.** Système de détermination (2) de la teneur en au moins une impureté dissoute dans un liquide cryogénique, l'au moins une impureté étant moins volatile que le liquide cryogénique, comportant :

• une capacité (3) apte à recevoir un volume initial du liquide cryogénique,
• des moyens de vaporisation (84) de tout le liquide cryogénique présent dans la capacité (3) en circuit ouvert, aptes à favoriser la formation d'une phase solide ou liquide de l'au moins une impureté dans la capacité (3),
• des moyens d'isolation de la capacité (3) de toute sortie de matière une fois tout le liquide cryogénique vaporisé par les moyens de vaporisation (84),
• des moyens d'envoi, dans la capacité (3) isolée par les moyens d'isolation, d'un volume déterminable de gaz, et des moyens de vaporisation ou de sublimation de la phase solide ou liquide de l'au moins une impureté de sorte à charger le gaz présent dans la capacité (3) en l'impureté, par chauffage du gaz présent dans la capacité (3),
• des moyens d'isolation (74) de la capacité (3) de toute entrée de matière une fois la phase solide ou liquide dissoute dans le gaz présent dans la capacité (3),
• des moyens d'envoi du gaz chargé en l'au moins une impureté depuis la capacité (3) vers un analyseur de gaz (6), et
• des moyens de détermination de la teneur en l'au moins une impureté dans le liquide cryogénique, à partir d'une teneur en l'au moins une impureté mesurée dans le gaz chargé en l'impureté par l'analyseur de gaz (6) **caractérisé en ce que** les moyens d'envoi (140) d'un volume déterminable de gaz dans la capacité (3) comportent un réservoir (7) de volume connu et une tuyauterie reliant une sortie du réservoir (7) à un accès (36) à la capacité (3), ainsi qu'une vanne (74) apte à isoler la capacité (3) du réservoir (7).

**10.** Système de détermination (2) de la teneur en au moins une impureté dissoute dans un liquide cryogénique selon la revendication 9 , dans lequel les moyens de vaporisation (84) sont aptes à produire un effet de thermosiphon, les moyens de vaporisation (84) comportant un corps (4) thermiquement conducteur en forme globale de cylindre évidé dans sa hauteur (H) par un conduit d'admission (42) et des conduits d'évacuation (44), qui débouchent d'une part sur une face (46) du corps (4) délimitant une partie basse de la capacité (3), et d'autre part sur une face (48) du corps (4) opposée à la face (46) délimitant une partie basse de la capacité (3), les moyens de vaporisation (84) comportant également un collecteur (8) disposé sur la face opposée (48) et reliant fluidiquement le conduit d'admission (42) avec les conduits d'évacuation (44).

**Patentansprüche**

**1.** Ein Verfahren (100) zur Bestimmung des Gehalts an mindestens einer in einer kryogenen Flüssigkeit gelösten Verunreinigung, wobei die mindestens eine Verunreinigung weniger flüchtig als die kryogene Flüssigkeit ist, umfassend die Schritte:

* Füllen (110) eines Behälters (3) mit einem Ausgangsvolumen an kryogener Flüssigkeit,
* Verdampfen (120) der gesamten in dem Behälter (3) vorhandenen kryogenen Flüssigkeit innerhalb des Behälters (3), wobei der Druck in dem Behälter (3) während des Verdampfens (120) kleiner oder gleich dem Druck in dem Behälter (3) während des Füllschritts ist, und das aus dem Verdampfen (120) resultierende Gas aus dem Behälter (3) abgeführt wird, wodurch die Bildung einer festen oder flüssigen Phase der Verunreinigung in dem Behälter (3) gefördert wird, - Isolieren (130) des Behälters (3) von jedem Materialauslass,

* Einleiten (140) eines bestimmbaren Gasvolumens in den Behälter (3), und Erhitzen des in dem Behälter (3) vorhandenen Gases, um die flüssige oder feste Phase der Verunreinigung in das in dem Behälter (3) vorhandene Gas zu verdampfen oder zu sublimieren, welches dadurch mit der Verunreinigung beladen wird,

* Isolieren (150) des Behälters (3) von jedem Materialeinlass,

* Einleiten des mit der Verunreinigung beladenen Gases (170) aus dem Behälter (3) zu einem Gasanalysator (6), und

* Bestimmen (180) des Gehalts an der Verunreinigung in der kryogenen Flüssigkeit basierend auf einem Gehalt an der Verunreinigung, der in dem mit der Verunreinigung beladenen Gas durch den Gasanalysator (6) gemessen wurde.

2. Das Verfahren (100) zur Bestimmung des Gehalts an mindestens einer in einer kryogenen Flüssigkeit gelösten Verunreinigung nach Anspruch 1, wobei das Gas des bestimmbaren Gasvolumens ausgewählt ist aus Stickstoff, Helium oder nicht verschmutzter Trockenluft.

3. Das Verfahren (100) zur Bestimmung des Gehalts an mindestens einer in einer kryogenen Flüssigkeit gelösten Verunreinigung nach Anspruch 1 oder 2, wobei das bestimmbare Gasvolumen aus einem Reservoir (7) mit bekanntem Volumen stammt, und wobei das Bestimmungsverfahren (100) umfasst:

* einen ersten Messschritt (115) des Drucks und der Temperatur innerhalb des Reservoirs (7), vor dem Schritt (140) des Einleitens des bestimmbaren Gasvolumens in den Behälter (3),

* einen zweiten Messschritt (160) des Drucks und der Temperatur innerhalb des Reservoirs (7), nach dem Schritt (140) des Einleitens des bestimmbaren Gasvolumens in den Behälter (3), und

* einen Bestimmungsschritt (165) des bestimmbaren Gasvolumens oder seiner Masse in Abhängigkeit von den Messungen, die während des ersten und zweiten Messschritts (115, 160) durchgeführt wurden, und in Abhängigkeit von dem bekannten Volumen des Reservoirs (7).

4. Das Verfahren (100) zur Bestimmung des Gehalts an mindestens einer in einer kryogenen Flüssigkeit gelösten Verunreinigung nach Anspruch 3, wobei vor dem Schritt (140) des Einleitens des bestimmbaren Gasvolumens in den Behälter (3) das Gas in dem Reservoir Umgebungstemperatur und einen Druck von mehr als 5 bar aufweist, und vorzugsweise zwischen 5 und 10 bar liegt.

5. Das Verfahren (100) zur Bestimmung des Gehalts an mindestens einer in einer kryogenen Flüssigkeit gelösten Verunreinigung nach Anspruch 3 oder 4, umfassend einen Füllschritt (105) des Reservoirs (7) mit dem Gas, das dazu bestimmt ist, mit der Verunreinigung beladen zu werden, vor oder während des Verdampfungsschritts (120).

6. Das Verfahren (100) zur Bestimmung des Gehalts an mindestens einer in einer kryogenen Flüssigkeit gelösten Verunreinigung nach einem der Ansprüche 1 bis 5, wobei der Druck in dem Behälter (3) während des Verdampfungsschritts (120) auf einen Wert zwischen 0,2 bar und 0,3 bar und vorzugsweise gleich 0,2 bar gebracht wird.

7. Das Verfahren (100) zur Bestimmung des Gehalts an mindestens einer in einer kryogenen Flüssigkeit gelösten Verunreinigung nach einem der Ansprüche 1 bis 6, wobei das in den Behälter (3) eingeleitete bestimmbare Gasvolumen einem Konzentrationsfaktor von mehr als 30 entspricht, zwischen dem durch den Gasanalysator (6) gemessenen Verunreinigungsgehalt und dem entsprechenden Verunreinigungsgehalt des Ausgangsvolumens der kryogenen Flüssigkeit.

8. Das Verfahren (100) zur Bestimmung des Gehalts an mindestens einer in einer kryogenen Flüssigkeit gelösten Verunreinigung nach einem der Ansprüche 1 bis 7, wobei dem Schritt (170) des Einleitens des mit der Verunreinigung beladenen Gases aus dem Behälter (3) zu einem Gasanalysator (6) ein Kühlschritt (190) des Behälters (3) folgt.

9. Ein System (2) zur Bestimmung des Gehalts an mindestens einer in einer kryogenen Flüssigkeit gelösten Verunreinigung, wobei die mindestens eine Verunreinigung weniger flüchtig als die kryogene Flüssigkeit ist, umfassend:

* einen Behälter (3), der geeignet ist, ein Ausgangsvolumen der kryogenen Flüssigkeit aufzunehmen,

* Verdampfungsmittel (84) für die gesamte in dem Behälter (3) vorhandene kryogene Flüssigkeit in offenem Kreislauf, die geeignet sind, die Bildung einer festen oder flüssigen Phase der mindestens einen Verunreinigung in dem Behälter (3) zu fördern,

* Isoliermittel (84) zum Isolieren des Behälters (3) von jedem Materialauslass, sobald die gesamte kryogene Flüssigkeit durch die Verdampfungsmittel (84) verdampft wurde,

* Mittel zum Einleiten (140) eines bestimmbaren Gasvolumens in den durch die Isoliermittel isolierten Behälter (3), und Verdampfungs- oder Sublimationsmittel für die feste oder flüssige Phase der mindestens einen Verunreinigung, um das in dem Behälter (3) vorhandene Gas mit der Verunreinigung zu beladen, durch Erhitzen des in dem Behälter (3) vorhandenen Gases,

* Isoliermittel (74) zum Isolieren des Behälters (3) von jedem Materialeinlass, sobald die feste oder flüssige Phase in dem in dem Behälter (3) vorhandenen Gas gelöst ist, und

* Mittel zum Einleiten des mit der mindestens einen Verunreinigung beladenen Gases aus dem Behälter (3) zu einem Gasanalysator (6), und

* Mittel zur Bestimmung des Gehalts an der mindestens einen Verunreinigung in der kryogenen Flüssigkeit, basierend auf einem Gehalt an der mindestens einen Verunreinigung, der in dem mit der Verunreinigung beladenen Gas durch den Gasanalysator (6) gemessen wurde, **dadurch gekennzeichnet, dass** die Mittel (140) zum Einleiten eines bestimmbaren Gasvolumens in den Behälter (3) ein Reservoir (7) mit bekanntem Volumen und eine Rohrleitung umfassen, die einen Auslass des Reservoirs (7) mit einem Gaszugang (36) zu dem Behälter (3) verbindet, sowie ein Ventil (74), das geeignet ist, den Behälter (3) von dem Reservoir (7) zu isolieren.

10. Das Bestimmungssystem (2) zur Bestimmung des Gehalts an mindestens einer in einer kryogenen Flüssigkeit gelösten Verunreinigung nach Anspruch 9, wobei die Verdampfungsmittel (84) geeignet sind, einen Thermosiphoneffekt zu erzeugen, wobei die Verdampfungsmittel (84) einen thermisch leitenden Körper (4) in der Gesamtform eines Zylinders umfassen, der in seiner Höhe (H) durch eine Einlassleitung (42) und Auslassleitungen (44) ausgehöhlt ist, die einerseits auf einer Fläche (46) des Körpers (4) münden, die einen unteren Teil des Behälters (3) begrenzt, und andererseits auf einer Fläche (48) des Körpers (4), die der Fläche (46) gegenüberliegt, die einen unteren Teil des Behälters (3) begrenzt, wobei die Verdampfungsmittel (84) auch einen Kollektor (8) umfassen, der auf der gegenüberliegenden Fläche (48) angeordnet ist und die Einlassleitung (42) mit den Auslassleitungen (44) fluidisch verbindet.

## Claims

1. A method (100) for determining the content of at least one impurity dissolved in a cryogenic liquid, the at least one impurity being less volatile than the cryogenic liquid, comprising the steps of:

    * filling (110) a vessel (3) with an initial volume of cryogenic liquid,
    * vaporizing (120), within the vessel (3), all the cryogenic liquid present in the vessel (3), the pressure in the vessel (3) during the vaporization (120) being less than or equal to the pressure in the vessel (3) during the filling step, and the gas resulting from the vaporization (120) being vented from the vessel (3), thus promoting the formation of a solid or liquid phase of the impurity in the vessel (3), - isolating (130) the vessel (3) from any matter outlet,
    * sending (140) a determinable volume of gas into the vessel (3), and heating the gas present in the vessel (3) so as to vaporize or sublime the liquid or solid phase of the impurity into the gas present in the vessel (3), which is thus loaded with the impurity,
    * isolating (150) the vessel (3) from any matter inlet,
    * sending the gas (170) loaded with the impurity from the vessel (3) to a gas analyzer (6), and
    * determining (180) the content of the impurity in the cryogenic liquid from a content of the impurity measured in the gas loaded with the impurity by the gas analyzer (6).

2. The method (100) for determining the content of at least one impurity dissolved in a cryogenic liquid according to claim 1, in which the gas of the determinable volume of gas is chosen from nitrogen, helium, or unpolluted dry air.

3. The method (100) for determining the content of at least one impurity dissolved in a cryogenic liquid according to claim 1 or 2, in which the determinable volume of gas originates from a reservoir (7) of known volume, and in which the determination method (100) comprises:

    * a first step (115) of measuring the pressure and temperature within the reservoir (7), before the step (140) of sending the determinable volume of gas into the vessel (3),
    * a second step (160) of measuring the pressure and temperature within the reservoir (7), after the step (140) of sending the determinable volume of gas into the vessel (3), and
* a step (165) of determining the determinable volume of gas or its mass as a function of the measurements performed during the first and second measuring steps (115, 160), and as a function of the known volume of the reservoir (7).

4. The method (100) for determining the content of at least one impurity dissolved in a cryogenic liquid according to claim 3, wherein, before the step (140) of sending the determinable volume of gas into the vessel (3), the gas in the reservoir is at ambient temperature and at a pressure greater than 5 bars, and preferably comprised between 5 and 10 bars.

5. The method (100) for determining the content of at least one impurity dissolved in a cryogenic liquid according to claim 3 or 4, comprising a filling step (105) of the reservoir (7) with the gas intended to be loaded with the impurity, before or during the vaporization step (120).

6. The method (100) for determining the content of at least one impurity dissolved in a cryogenic liquid according to any one of claims 1 to 5, in which the pressure within the vessel (3) during the vaporization step (120) is brought to a value comprised between 0.2 bar and 0.3 bar and preferably equal to 0.2 bar.

7. The method (100) for determining the content of at least one impurity dissolved in a cryogenic liquid according to any one of claims 1 to 6, in which the determinable volume of gas sent into the vessel (3) corresponds to a concentration factor greater than 30 between the impurity content measured by the gas analyzer (6) and the corresponding impurity content of the initial volume of cryogenic liquid.

8. The method (100) for determining the content of at least one impurity dissolved in a cryogenic liquid according to any one of claims 1 to 7, in which the step (170) of sending the gas loaded with the impurity from the vessel (3) to a gas analyzer (6) is followed by a cooling step (190) of the vessel (3).

9. A system (2) for determining the content of at least one impurity dissolved in a cryogenic liquid, the at least one impurity being less volatile than the cryogenic liquid, comprising:

   * a vessel (3) adapted to receive an initial volume of the cryogenic liquid,
   * vaporization means (84) for all the cryogenic liquid present in the vessel (3) in open circuit, suitable for promoting the formation of a solid or liquid phase of the at least one impurity in the vessel (3),
   * isolation means (84) for isolating the vessel (3) from any matter outlet once all the cryogenic liquid has been vaporized by the vaporization means (84),
   * means for sending (140) a determinable volume of gas into the vessel (3) isolated by the isolation means, and vaporization or sublimation means for the solid or liquid phase of the at least one impurity so as to load the gas present in the vessel (3) with the impurity, by heating the gas present in the vessel (3),
   * isolation means (74) for isolating the vessel (3) from any matter inlet once the solid or liquid phase is dissolved in the gas present in the vessel (3), and
   * means for sending the gas loaded with the at least one impurity from the vessel (3) to a gas analyzer (6), and
   * means for determining the content of the at least one impurity in the cryogenic liquid, from a content of the at least one impurity measured in the gas loaded with the impurity by the gas analyzer (6), **characterized in that** the means (140) for sending a determinable volume of gas into the vessel (3) comprise a reservoir (7) of known volume and piping connecting an outlet of the reservoir (7) to a gas access (36) to the vessel (3), as well as a valve (74) adapted to isolate the vessel (3) from the reservoir (7).

10. The determination system (2) for determining the content of at least one impurity dissolved in a cryogenic liquid according to claim 9, in which the vaporization means (84) are adapted to produce a thermosiphon effect, the vaporization means (84) comprising a thermally conductive body (4) globally in the shape of a cylinder hollowed out along its height (H) by an admission conduit (42) and evacuation conduits (44), which open firstly onto a face (46) of the body (4) delimiting a lower part of the vessel (3), and secondly onto a face (48) of the body (4) opposite to the face (46) delimiting a lower part of the vessel (3), the vaporization means (84) also comprising a collector (8) disposed on the opposite face (48) and fluidically connecting the admission conduit (42) with the evacuation conduits (44).

[Fig 1]

[Fig 2]

[Fig 3]

[Fig 4]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003228707 A1
- FR 2858416 A1
- FR 3066596 B1
- FR 3066597 B1